# EUROPEAN PATENT APPLICATION

(11) **EP 2 884 156 A1**
(43) Date of publication of application: **17.06.2015**
(21) Application number: 14001138.8
(22) Date of filing: 27.03.2014
(51) Int. Cl.: F21S 8/10, G02B 6/00

(54) **Light guide device and a lamp including the same**

(30) Priority: 13.12.2013 TW 102146111
(71) Applicant: TYC Brother Industrial Co., Ltd., Tainan 702 (TW)
(72) Inventor: Huang, Liang-Ren, 811 Kaohsiung City (TW)
(74) Representative: Zeitler Volpert Kandlbinder Patent- und Rechtsanwälte Partnerschaft mbB

(57) **Abstract**

A light guide device (30) includes a light guide (3) that has a light reflective side (31) and a light exit side (32). The light reflective side (31) has first reflective segments (311) and second reflective segments (312). The first reflective segments (311) are structured such that each of the first reflective segments (311) reflects the light toward the light exit side (32) for the light to exit from the light exit side (32). Each of the second reflective segments (312) is disposed between two adjacent ones of the first reflective segments (311), and cooperates with the light exit side (32) to reflect and make the light propagate inside the light guide (3).

## Description

The invention relates to a light guide device, more particularly to a light guide device for distributing light from a light emitting member in a discrete manner, and to a lamp including the light guide device.

A first type of conventional light guide device is adapted to generate a substantially annular light pattern and is substantially configured as a notched ring. This type of conventional light guide device is provided with two opposite ends that are disconnectedly proximate to each other and includes a substantially annular reflective side and a substantially annular light exit side that is oppositely connected to the reflective side. The reflective side has a roughened surface, this type of conventional light guide device is adapted to cooperate with a single light emitting element. When light emitted from the single light emitting element enters the conventional light guide device, the reflective side reflects the light such that the light exits outwardly from the light exit side so as to form the substantially annular light pattern.

A second type of conventional light guide device is adapted to generate a light pattern in the form of a plurality of spaced-apart light spots that are arranged in a ring. Each of the light spots is formed by a light guide module that includes a light emitting element and a matching reflective structure and other relevant optical structures. Thus, the production cost is relatively high and the entire configuration is complicated.

Therefore, there is a need in the art to provide a light guide device that is capable of generating a light pattern composed of a plurality of spaced-apart light spots in a relatively economic manner.

Therefore, the object of the present invention is to provide a light guide device and a lamp including the light guide device that can alleviate the aforementioned drawbacks of the prior art.

According to one aspect of this invention, a light guide device for guiding light from a light emitting member in a discrete manner includes a light guide that has a light reflective side, a light exit side opposite to the light reflective side, and two spaced-apart connection sides each of which interconnects the light reflective side and the light exit side.

The light reflective side has a plurality of spaced-apart first reflective segments and a plurality of second reflective segments.

Each of the first reflective segments is structured so as to reflect the light toward the light exit side so that the light exits from the light exit side.

Each of the second reflective segments is disposed between two adjacent ones of the first reflective segments and cooperates with the light exit side to reflect and make the light propagate inside the light guide.

According to another aspect of this invention, a lamp includes a lamp casing, a reflector mounted inside the lamp casing, and the abovementioned light guide device.

Other features and advantages of the present invention will become apparent in the following detailed description of the preferred embodiments with reference to the accompanying drawings, of which:
Figure 1 is a rear perspective view of the first preferred embodiment of a light guide device according to the present invention, illustrating the light guide device assembled with a light emitting member;
Figure 2 is a fragmentary schematic view of the first preferred embodiment, illustrating light traveling paths of light guided by the light guide device;
Figure 3 is a schematic diagram, illustrating an arrangement of light exiting from a light exit side of the first preferred embodiment;
Figure 4 is a rear view of the second preferred embodiment of a light guide device according to the present invention;
Figure 5 is a partly exploded perspective view illustrating the preferable embodiment of a lamp according to the present invention; and
Figure 6 is a sectional view of the preferable embodiment of the lamp according to the present invention.

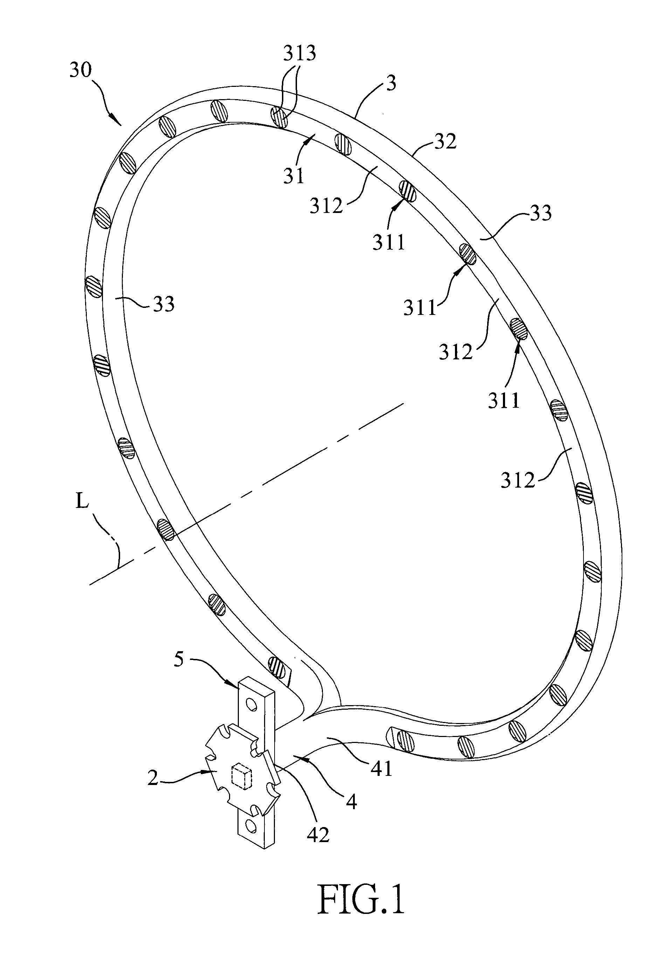

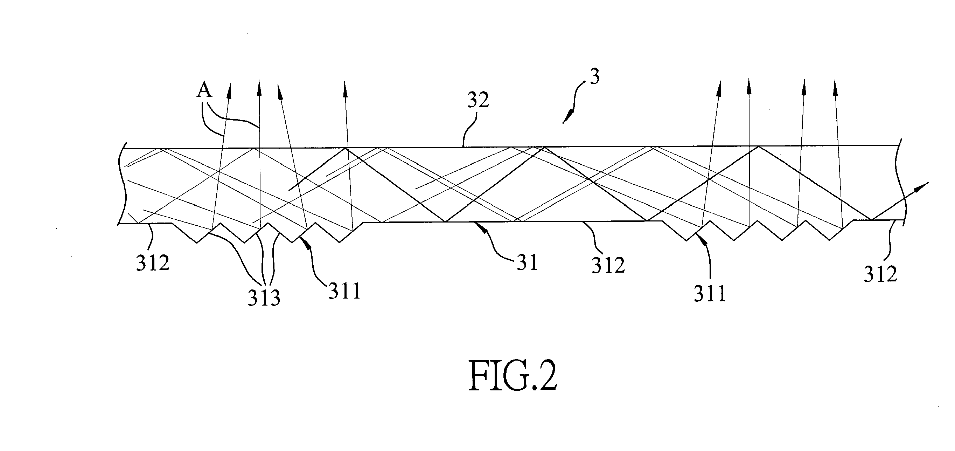

Referring to Figures 1 and 2, the first preferred embodiment of a light guide device 30 according to the present invention for guiding light from a light emitting member 2 in a discrete manner is illustrated. The light guide device 30 includes a light guide 3 and a light entry portion 4. The light guide device 30 may be made of a transparent plastic material and the light emitting member 2 may be a light emitting diode (LED).

The light guide 3 has a light reflective side 31, a light exit side 32 opposite to the light reflective side 31, and two spaced-apart connection sides 33 each of which interconnects the light reflective side 31 and the light exit side 32. In this preferred embodiment, the light guide 3 is configured as a ring surrounding an axis (L). All of the light reflective side 31, the light exit side 32 and the connection sides 33 are annular and surround the axis (L). The connection sides 33 have a width extending along the axis (L). Preferably, the light guide 3 has two opposite ends that are bent and extend along the axis (L) toward the light entry portion 4 so as to be merged with the light entry portion 4. In this arrangement, the light reflective side 31 is disposed more proximate to the light entry portion 4 and the light exit side 32 is disposed relatively away from the light entry portion 4.

The light reflective side 31 has a plurality of spaced-apart first reflective segments 311, each of which is structured to reflect the light toward the light exit side 32 for the light to exit from the light exit side 32, and a plurality of second reflective segments 312, each of which is disposed between two adjacent ones of the first reflective segments 311 and cooperates with the light exit side 32 to reflect and make the light propagate inside the light guide 3.

In this preferred embodiment, each of the first reflective segments 311 is configured as a textured surface. Preferably, each of the first reflective segments 311 has a plurality of protrusions 313 so as to form the textured surface. Each of the protrusions 313 extends between the connection sides 33 and is configured as a triangular prism. In such an arrangement, the protrusions 313 extend in parallel with each other between the connection sides 33. By virtue of variation on lengths of the protrusions 313 between the connection sides 33, each of the first reflective segments 311 is configured to have a circular cross section in a plane perpendicular to the axis (L). However, the shape of the cross section of the first reflective segments 311 in the plane perpendicular to the axis (L) is not limited in this respect and may have a heart figure, an ellipse figure, or other geometrical figures. By virtue of changes in the respective shapes of the cross sections of the first reflective segments 311 in the plane perpendicular to the axis (L), the light pattern that corresponds to the configuration of the first reflective segments 311 and that is formed by the light exiting from the light exit side 32 is changeable. Thus, the light pattern formed by the light guide device 30 is able to produce a varying and vivid luminance effect.

The textured surfaces of the first reflective segments 311 may be regular coarse surfaces or irregular coarse surfaces, as long as the first reflective segments 311 are able to reflect the light toward the light exit side 32.

Preferably, each of the second reflective segments 312 is configured as an even surface, i.e., there are substantially no textured surfaces formed on the second reflective segments 312. Thus, the light traveling toward the second reflective segments 312 is reflected toward the light exit side 32 under a substantially total internal reflection condition. That is to say, the light reflected toward the light exit side 32 is substantially reflected back toward the light reflective side 31 and is repeatedly reflected between the second reflective segments 312 and the light exit side 32 so as to propagate inside the light guide 3.

In this preferred embodiment, the light entry portion 4 is rod-shaped to extend along a direction parallel to the axis (L) and is secured on the light guide 3. Preferably, the light entry portion 4 has a connection end 41 that is coupled to the merged ends of the light guide 3, and a light entry end 42 that is opposite to the connection end 41 and that is proximate to the light emitting member 2. The light entry portion 4 is configured as a light concentrator that propagates the light from the light emitting member 2 to the light guide 3 through total internal reflection. Preferably, the light guide device 30 further includes a mounting plate 5 that is disposed in proximity to the light entry end 42 and between the light emitting member 2 and the light entry end 42 and that is connected to the light guide 3 through the light entry portion 4. Thereby, the light guide device 30 may be adapted to be disposed in a predetermined position. For example, the light guide device 30 may be adapted to be disposed in a vehicle light casing (not shown).

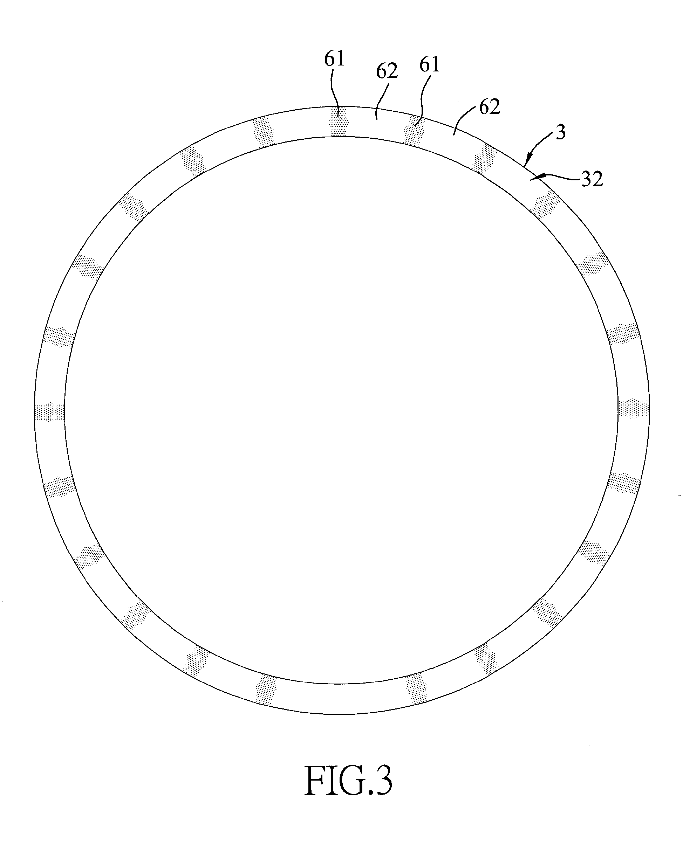

Referring to Figures 1 to 3, in actual use, the light emitting member 2 is disposed in proximity to the light entry end 42 of the light entry portion 4, and thus, the light is transmitted through the light entry portion 4 into the light guide 3. By way of total internal reflection, the light is able to propagate inside the light guide 3 in a manner similar to light propagating in an optical fiber. When the light emitted from the light emitting member 2 is transmitted into the light guide 3, a portion of the light incident upon the first reflective segments 311 of the light reflective side 31 reflect the light transmitted thereto toward the light exit side 32 and cause the light to exit from the light exit side 32 (the light travelling path (A) as shown in Figure 2). Part of the light emitted from the light emitting member 2 may be directly transmitted to the light exit side 32 or the connection sides 33 to exit therefrom. In some cases, a relatively minor part of the light that is emitted from the light emitting member 2 and that is transmitted to the light reflective side 31 may exit from the connection sides 33. a portion of the light emitted from the light emitting member 2 is transmitted to the second reflective segments 312 of the light reflective side 31 and is reflected by the second reflective segments 312 toward the light exit side 32, where most of the light arriving at the light exit side 32 will be reflected back inside the light guide 3 to continuously propagate inside the light guide 3 under total internal reflection, and only a minority of the light would exit outwardly from the light exit side 32.

Thus, the light pattern generated by the light reflected by the first reflective segments 311 and then exiting from the light exit side 32 is composed of a plurality of visibly spaced-apart bright regions 61 with a relatively high brightness. In addition, there are a plurality of dim regions 62 in the light pattern, each of which is disposed between two adjacent ones of the bright regions 61. Each of the dim regions 62 may be relatively dim or almost obscure such that the bright regions 61 are relatively conspicuous. The dim regions 62 are formed by the light reflected by the second reflective segments 312 of the reflective side 31 and then reflected back by the light exit side 32 and then propagating inside the light guide 3. Only a glimmer of the light may be projected outwardly from each of the dim regions 62.

By virtue of the arrangement of the first reflective segments 311 and the second reflective segments 312 of the light reflective side 31, the light guide device 30 is adapted to form a light pattern composed of the alternately displayed bright regions 61 and dim regions 62 so as to achieve a specific and changeable lighting effect. It should be noted that the light guide 3 may be configured to have other shapes instead of the annular figure, such as an S figure, a rectangular figure, or other shapes. In addition, the textured surface of each of the first reflective segments 311 may be designed in other ways. For example, each of the protrusions 313 may have a cross-section in another shape, e.g., arc shape, polygon, and so on, as long as the light reflected by the corresponding one of the first reflective segments 311 is able to exit from the light exit side 2. Moreover, neither the shape of the light entry portion 4 nor the arrangement between the light entry portion 4 and the light guide 3 should be limited as long as the light entry portion 4 is able to transmit the light emitted from the light emitting member 2 to the light guide 3.

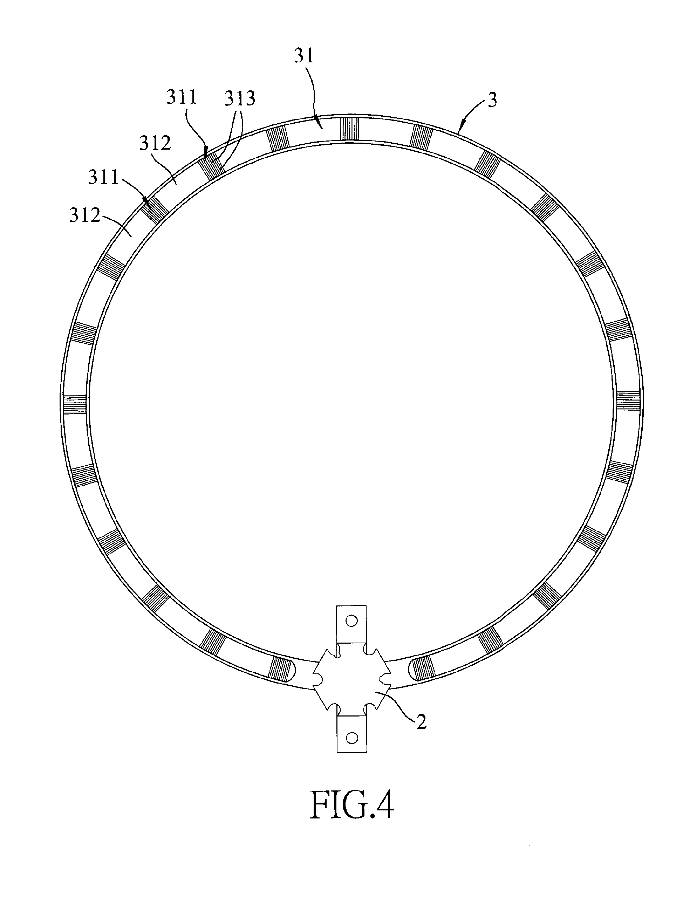

Figure 4 illustrates the second preferred embodiment of a light guide device 30 according to the present invention, which has a structure generally similar to that of the first preferred embodiment. However, the protrusions 313 of the first reflective segments 311 of the light reflective side 31 that extend between the connection sides 33 have the same length. In such a way, each of the first reflective segments 311 is configured as a substantially square shape. Thus, the light regions of the light pattern formed by the light guide device 30 are formed in shapes different from that of the light guide device 30 described in the first preferred embodiment while the transmission effect and brightness of the light remain substantially the same as that of the light guide device 30 of the first preferred embodiment.

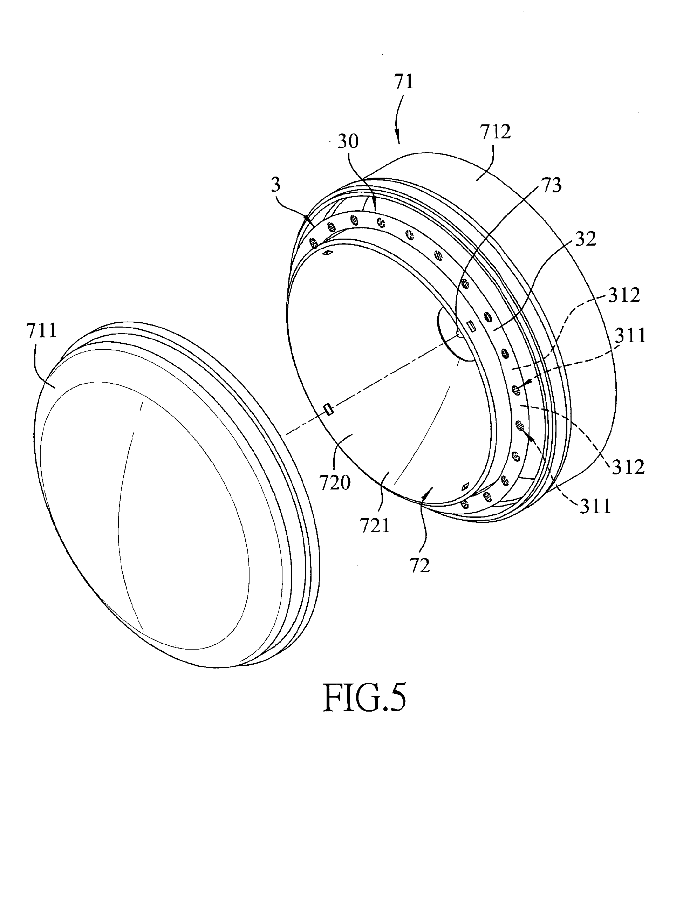

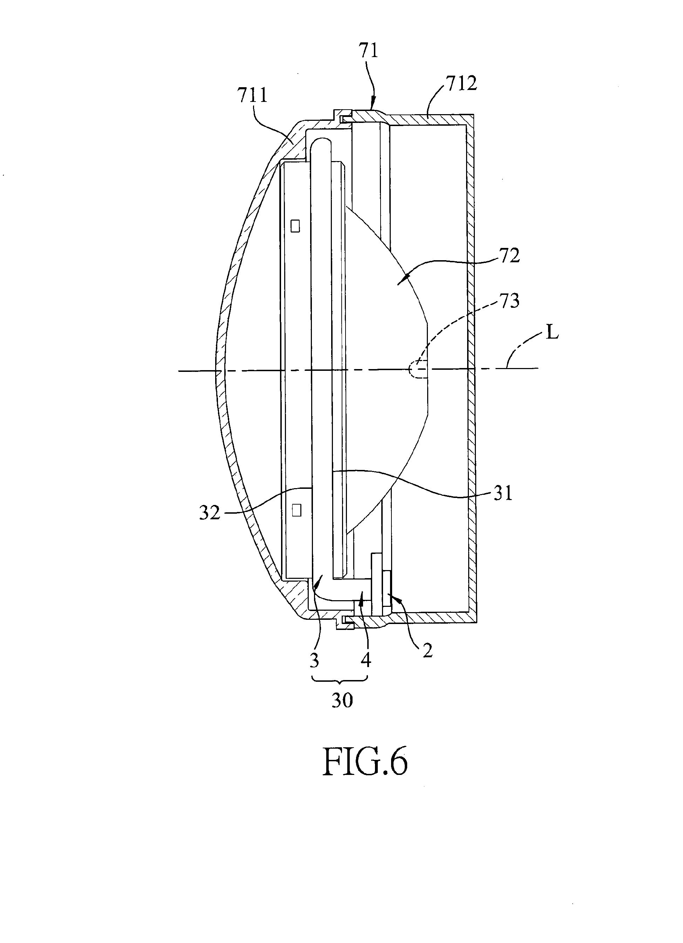

In other embodiments, the light guide device 30 may be adapted to be assembled as part of a lamp as well. Figures 5 and 6 exemplify a preferable embodiment of a lamp according to the present invention. The lamp includes a lamp casing 71, a reflector 72 mounted inside the lamp casing 71, a main light source 73 which is mounted in the lamp casing 71, the light guide device 30 of the first preferred embodiment shown in Figure 1, which surrounds the reflector 72 and is mounted in the lamp casing 71, and a light emitting member 2 which is coupled to the light guide device 30 and received in the lamp casing 71.

In this preferable embodiment, the lamp casing 71 has a front casing part 711 and a rear casing part 712 that is connected to the front casing part 711. The front casing part 711 faces the light exit side 32 and is made from a transparent material such that the light emitted from the main light source 73 and the light emitting member 2 is able to transmit outwardly of the lamp casing 71 through the front casing part 711.

The reflector 72 is configured as a bowl that has an annular inner reflection surface 721 surrounding a reflection space 720. The annular inner reflection surface 721 is converged along the axis (L) outwardly of the lamp casing 71.

The main light source 73 is disposed at a substantially central position of the reflector 72, and thus the light emitted from the main light source 73 is able to enter the reflection space 720 and be reflected by the annular inner reflection surface 721 so as to exit outwardly of the lamp casing 71.

In this preferable embodiment, the light guide 3 surrounds the reflector 72 so that the first reflective segments 311 and the second reflective segments 312 are alternately disposed and annularly spaced apart from each other relative to the axis (L).

When the lamp is in use, the reflector 72 reflects the light emitted from the main light source 73 so as to transmit the light outwards from the lamp casing 71 as primary illumination light of the lamp. By virtue of the light guide device 30 guiding the light emitted from the light emitting member 2, the light emitted from the light emitting member 2 is transmitted outwards as auxiliary light or decorative lighting.

To sum up, as compared to the first type of conventional light guide device that is capable of generating a continuous light pattern using a single light emitting member, and as compared to the second type of conventional light guide device that requires the use of multiple light emitting members to generate a light pattern with multiple light spots, by virtue of the alternately arranged first and second reflective segments 311, 312 of the light reflective side 31, the light guide device 30 of the present invention is able to generate a non-continuous, discrete light pattern with multiple spaced-apart light regions using only a single light emitting member 2 (such as an LED). Such structure is relatively simple and can be economically fabricated. In addition, the light guide device 30 of this invention can be widely used in, e.g., vehicle light apparatuses, such as vehicle headlights/taillights, advertisement light billboards, luminous devices, etc., by means of the mounting plate 5.

## Claims

1. A light guide device (30) for guiding light from a light emitting member (2) in a discrete manner, **characterized by**
a light guide (3) having a light reflective side (31), a light exit side (32) opposite to said light reflective side (31), and two spaced-apart connection sides (33) each of which interconnects said light reflective side (31) and said light exit side (32), said light reflective side (31) having
a plurality of spaced-apart first reflective segments (311), each of which is structured so as to reflect the light toward said light exit side (32) so that the light exits said light guide (3) from said light exit side (32), and
a plurality of second reflective segments (312) each of which is disposed between two adjacent ones of said first reflective segments (311) and cooperates with said light exit side (32) to reflect and make the light propagate inside said light guide (3).

2. The light guide device (30) as claimed in Claim 1, **characterized in that** said light guide (3) is configured as a ring surrounding an axis (L), all of said light reflective side (31), said light exit side (32) and said connection sides (33) being annular and surrounding the axis (L), said connection sides (33) having a width extending along the axis (L).

3. The light guide device (30) as claimed in Claim 1, **characterized in that** each of said first reflective segments (311) has a plurality of protrusions (313), each of said protrusions (313) extending between said connection sides (33).

4. The light guide device (30) as claimed in Claim 3, **characterized in that** each of said first reflective segments (311) is configured as a textured surface formed by said protrusions (313).

5. The light guide device (30) as claimed in Claim 1, **characterized in that** each of said second reflective segments (312) is configured as an even surface.

6. A lamp **characterized by**:
a lamp casing (71);
a reflector (72) which is mounted inside said lamp casing (71); and
a light guide device (30) which is for guiding light of a light emitting member (2), and which surrounds said reflector (72) and is mounted in said lamp casing (71), said light guide device (30) including
a light guide (3) having a light reflective side (31), a light exit side (32) opposite to said light reflective side (31), and two spaced-apart connection sides (33) each of which interconnects said light reflective side (31) and said light exit side (32), said light reflective side (31) having
a plurality of spaced-apart first reflective segments (311), each of which is structured so as to reflect the light toward said light exit side (32) so that the light exits said light guide (3) from said light exit side (32), and
a plurality of second reflective segments (312) each of which is disposed between two adjacent ones of said first reflective segments (311) and cooperates with said light exit side (32) to reflect and propagate the light inside said light guide (3).

7. The light apparatus as claimed in Claim 6, **characterized in that** said light guide (3) of said light guide device (30) is configured as a ring surrounding said reflector (72) that surrounds an axis (L) , all of said light reflective side (31), said light exit side (32) and said connection sides (33) being annular, said connection sides (33) having a width extending along the axis (L), said reflector (72) being configured as a bowl that has an annular inner reflection surface (721) and that defines a reflection space (720), said annular inner reflection surface (721) being converged along the axis (L) outwardly of said lamp casing (71).
